# EUROPEAN PATENT APPLICATION

(11) **EP 3 650 711 A1**
(43) Date of publication of application: **13.05.2020**
(21) Application number: 19202166.5
(22) Date of filing: 09.10.2019
(51) Int. Cl.: F15B 15/14, F15B 21/00, F15B 11/036

(54) **MODULAR LINEAR ACTUATOR**

(30) Priority: 06.11.2018 GB 201818075
(71) Applicant: Rolls-Royce plc, London N1 9FX (GB)
(72) Inventor: Hussain, Zahid, Derby, Derbyshire DE24 8BJ (GB); Tramontin, Timothy, Derby, Derbyshire DE24 8BJ (GB)
(74) Representative: Rolls-Royce plc

(57) **Abstract**

A modular fluid-driven linear actuator 400 comprising an actuator support comprising a first part 410 and a second part 420 configured for relative linear movement, wherein the actuator support is configured to hold a plurality of removable actuator modules 430 in parallel and in respective module-receiving locations defined between the first part and the second part. At least one actuator module 430 is removably installed in the actuator support and held in a respective module-receiving location of the plurality. A first fluid manifold 413 is configured to provide a drive fluid to each actuator module when received in a respective module-receiving location, to act on a piston 432 of the actuator module having a respective piston area to drive the piston 432 in a first direction. A total piston area of the modular actuator is variable by installing and uninstalling actuator modules in the actuator support.

## Description

### FIELD OF THE DISCLOSURE

The present disclosure relates to a modular actuator for a variable stator vane arrangement.

### BACKGROUND

Gas turbine engines comprise several stages of axial compression. In order to optimise performance of the engine and allow for acceptable engine operability throughout the flight envelope, stator vanes may be configured to pivot to vary their pitch or angle of incidence with respect to the annulus flow through the engine. One known arrangement for actuating such stator vanes is to provide a unison ring coupled to each of the stator vanes and rotatable about a central axis of the engine to cause the stator vanes to pivot. One or more actuators with control rods acting on the unison ring may be disposed around the unison ring to drive rotation.

### SUMMARY

The present disclosure provides a modular fluid-driven linear actuator, a gas turbine engine, and a method of reconfiguring a fluid-driven linear actuator, as set out in the appended claims.

According to an aspect there is provided a modular fluid-driven linear actuator comprising:
an actuator support comprising a first part and a second part configured for relative linear movement, wherein the actuator support is configured to hold a plurality of removable actuator modules in parallel and in respective module-receiving locations defined between the first part and the second part;
at least one actuator module removably installed in the actuator support and held in a respective module receiving location of the plurality; and
a first fluid manifold configured to provide a drive fluid to each actuator module when received in a respective module-receiving location, to act on a piston of the actuator module having a respective piston area to drive the piston in a first direction;
whereby a total piston area of the modular actuator is variable by installing and uninstalling actuator modules in the actuator support.

The first part may comprise a plurality of structural attachment points, each configured to support a respective one of the plurality of removable actuator modules.

The first part may comprise a plurality of support arms, each defining a respective structural attachment point for holding a removable actuator module. The first fluid manifold may be integral with the first part.

When the first part comprises a plurality of support arms, the first fluid manifold may comprise a plurality of channels extending through respective ones of the support arms.

The first part may be made by additive manufacture, for example in a layer-by-layer manner. This may permit forming the first part to include complex internal channels corresponding to the manifold(s).

The first part may comprise a plurality of compound structural and fluid couplings each configured to support a respective removable actuator module and to provide drive fluid from the first fluid manifold to the actuator module.

Each compound structural and fluid coupling may comprise a threaded coupling, or a push-fit coupling.

The first part may comprise a structural attachment point for receiving a removable actuator module in a module-receiving location, and a separate fluid port for providing drive fluid to the removable actuator module when received in the module-receiving location.

The module-receiving locations may be defined in an array distributed around a central shaft of the actuator support, wherein one of the first part and the second part is slidably received on the shaft for relative linear movement between the first part and the second part.

The shaft may be fixedly attached or integral with the first part. The second part may be slidably received on the shaft.

The actuator may comprise two structural attachment points associated with each respective module-receiving location, optionally wherein the two structural attachment points are configured to support an actuator module towards opposing ends.

One of the two structural attachment points associated with each respective module-receiving location may be configured to statically receive a bearing mount configured to support a slideable part of an actuator module when received in the respective module-receiving location, the slideable part moving moves together with the piston.

The slideable part of the actuator module which moves together with the piston may be a piston stem (which may also be referred to as a piston arm) extending from the piston to drive the second part in movement relative the first part.

In other examples, a bearing mount may be provided on an actuator body of the actuator module (and which may support a piston stem or piston arm as described above). In such examples, the bearing mount may not form a structural attachment between the actuator module and the first part of the actuator support.

The second part may be configured to attach to a piston of each actuator module, such that when a plurality of actuator modules are installed in respective module receiving locations, movement of each of the pistons drives movement of the second part.

The second part may be configured to attach to a piston of each actuator module (when received in a respective module-receiving location) by a snap-fit connection, threaded connection, or any suitable form of connection.

A piston of the at least one actuator module may have a travel between a first position and a second position. The actuator may comprise a biasing element to bias a piston of the at least one actuator module to return to the first position, and wherein the piston is configured to move from the first position to the second position when fluid is provided through the first fluid manifold to the actuator module.

In some examples, the biasing element may act between the first part and the second part. A biasing element may be provided in the at least one actuator module to bias the piston of the respective actuator module to return to the first position.

The biasing element may bias the actuator, or the respective actuator module, so as to drive the piston of the at least one actuator module to move in a second direction opposing the first direction.

The actuator may further comprise a second fluid manifold configured to provide a drive fluid to each actuator when received in a respective module, to act on the piston of the actuator module to drive the piston in a second direction opposing the first direction.

The first fluid manifold and the second fluid manifold may be functionally isolated from one another, such that the fluid pressure in the second fluid manifold is isolated from a change in fluid pressure in the first fluid manifold (i.e. owing to upstream pumping of drive fluid), and vice versa.

The first fluid manifold may have actuator ports disposed towards a first end of the module-receiving locations and configured to provide drive fluid to a first fluid chamber of an actuator module when received in a respective module-receiving location, the first fluid chamber being on a first side of the piston. The second fluid manifold may have actuator ports disposed towards a second end of the module-receiving locations and may be configured to provide drive fluid to a second fluid chamber of an actuator module when received in a respective module-receiving location, the second fluid chamber being on a second side of the piston.

The at least one actuator module may comprise:
a piston chamber which slidably receives the piston;
a first inlet port configured to receive drive fluid from a respective actuator port of the first fluid manifold on a first side of the piston and to provide the drive fluid to a first fluid chamber on the first side of the piston to act on the piston;
a second inlet port configured to receive drive fluid from a respective actuator port of the second fluid manifold on the first side of the piston; and
a bypass channel configured to convey drive fluid from the second inlet port to a second fluid chamber on a second opposing side of the piston to act on the piston.

One or more actuator modules may be attached to the second end support by a joint that permits relative pivoting movement between the second end support and the respective actuator, such as a universal joint or ball joint. The actuator may be configured to cause tilting of the second end support, for example by moving one or more actuator modules at a different rate to one or more other actuator modules (i.e. a first set and a second set of actuator modules). The two sets of actuator modules may have different piston areas in order to effect different rates of movement, or may be provided with drive fluid through different manifolds that may be coupled to different sources of drive fluid.

According to a second aspect there is provided a gas turbine engine comprising a modular fluid-driven linear actuator in accordance with the first aspect. The gas turbine engine may comprise a variable stator vane arrangement, and the modular fluid-driven linear actuator may be configured to actuate the variable stator vane arrangement.

According to a third aspect there is provided a method of reconfiguring a fluid-driven linear actuator in accordance with the first aspect, which may be installed in a gas turbine engine in accordance with the second aspect, the method comprising varying a total piston area of the actuator by:
installing an actuator module in one of the module receiving locations; and/or
uninstalling an actuator module installed in one of the module receiving locations.

The method may further comprise closing a fluid port of the manifold corresponding to an uninstalled actuator module, after uninstalling the respective actuator module.

The method may comprise installing an actuator module in one of the module receiving locations having a different travel or rate of extension for a given motive fluid pressure to an installed or previously-installed actuator module. Accordingly, actuator modules having a first travel or rate of extension may be replaced with actuator modules having a second travel or rate of extension to change the performance of the actuator. Such replacement may be with respect to all previously installed actuator modules, or may be for a proper subset of the installed actuator modules so as to enable tilting movement between the first part and the second part. In some example methods, no actuator modules belonging to a first set of actuator modules may be uninstalled, and a second set (which may consist of one) actuator modules may be installed having a second travel or rate of extension different to the or each actuator module of the first set.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** schematically shows a cutaway view of an intermediate pressure compressor section in a gas turbine engine;
**Figure 3** schematically shows a perspective view of a first example modular fluid-driven linear actuator;
**Figure 4** schematically shows a side view of the first example modular fluid-driven linear actuator;
**Figures 5 and 6** schematically show a side cross-sectional view of a second example modular fluid-driven linear actuator;
**Figures 7 and 8** schematically show a side cross-sectional view of a third example modular fluid-driven linear actuator;
**Figures 9 and 10** schematically show a side cross-sectional view of a fourth example modular fluid-driven linear actuator;
**Figures 11 and 12** schematically show a side cross-sectional view of a fifth example modular fluid-driven linear actuator;
**Figure 13** is a flow diagram of an example method of reconfiguring a modular fluid-driven linear actuator.

### DETAILED DESCRIPTION

Aspects and embodiments of the present disclosure will now be discussed with reference to the accompanying figures. Further aspects and embodiments will be apparent to those skilled in the art.

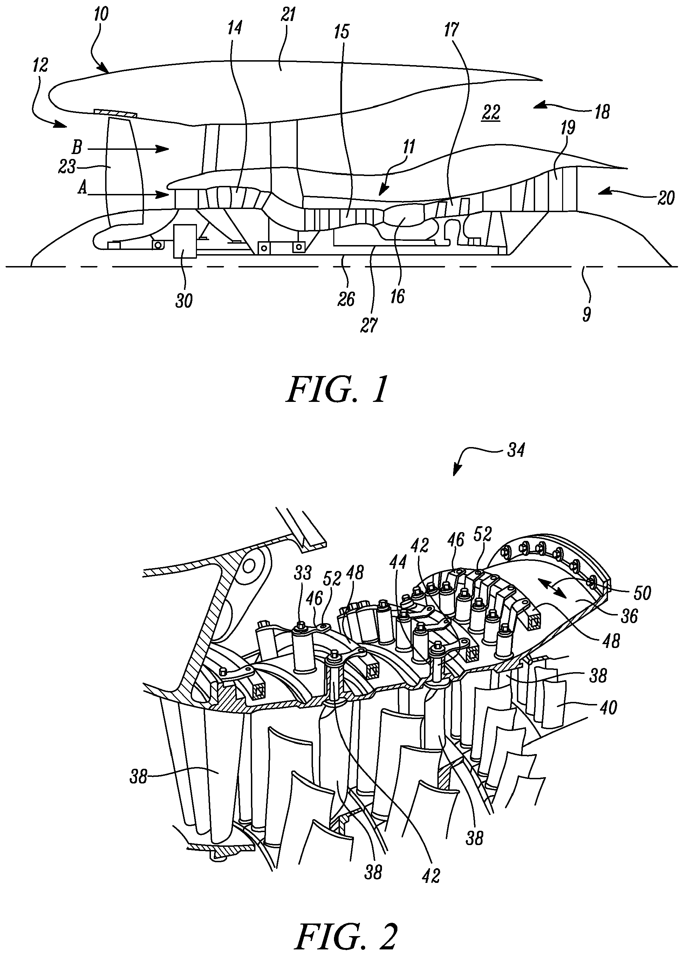

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Other gas turbine engines to which the present disclosure may be applied may have alternative configurations. For example, such engines may have an alternative number of compressors and/or turbines and/or an alternative number of interconnecting shafts.

By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

**Figure 2** shows a cutaway view of an example intermediate pressure compressor 34 of the gas turbine engine. In this example, the intermediate pressure compressor 34 has a casing 36 and four successive compression stages, each of which comprises a set of stator vanes 38 and a set of rotor vanes 40 downstream of the set of stator vanes 38.

Each set of stator vanes 38 comprises a plurality of stator vanes 38 which are pivotably mounted to the casing 36 around its circumference and extend radially inwardly from the casing 36. Each set of rotor vanes 40 comprises a plurality of rotor vanes 40 which are mounted to a rotatable support on a shaft (not shown) towards a radial centre of the casing 36, and are rotatable within the casing 36 around the rotational axis 9 of the engine 10.

The stator vanes 38 are variable stator vanes such that the pitch (or incidence, angle of attack) of the stator vanes 38 can be varied during use to optimise performance and manage operability of the engine 10. In this example, the stator vanes 38 each comprise a vane stem 42 extending from a radially outer end of the stator vane 38 and through a bush bearing 44 in the casing 36. The vane stems 42 are each coupled to a respective lever 46 by means of a bolt 33 outside the casing 36, the lever 46 extending perpendicularly out from the vane stem 42.

A unison ring 48 extends circumferentially around the casing 36 and is rotatable around the casing 36 by a crankshaft or bellcrank in circumferential directions indicated by arrow 50. Each compression stage has a corresponding unison ring 48. The levers 46 fixed to the stator vanes 38 in a compression stage are each pivotably coupled to the corresponding unison ring 48 of the respective compression stage by a pin 52.

To change the pitch of the variable stator vanes 38, the unison ring 48 is rotated around the casing 36 in a circumferential direction (as indicated by the arrow 50), causing the levers 46 to pivot, and therefore the stator vanes 38 to pivot and change pitch.

A variable stator vane arrangement as described above may be actuated to rotate by an actuator coupled to a unison ring by a suitable mechanical linkage. In some examples, the actuator may be a linear actuator.

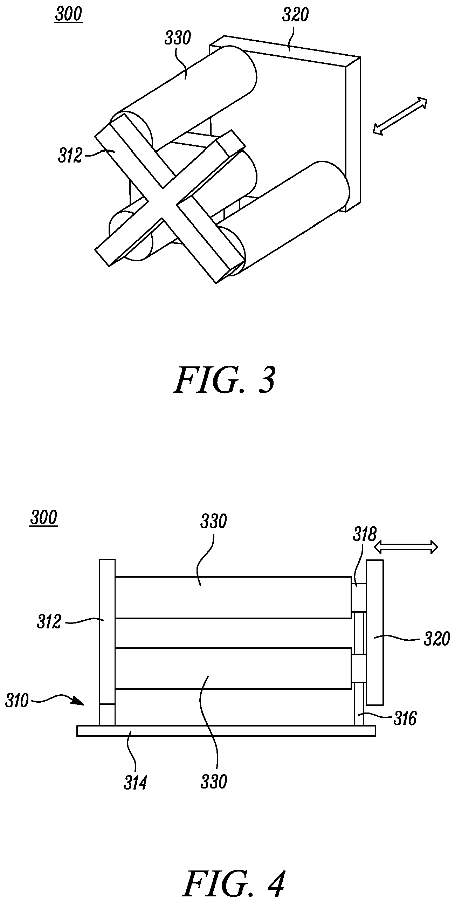

**Figure 3** shows a simplified perspective view of a first example fluid-driven modular linear actuator 300 which is suitable for actuating a variable stator vane arrangement of a gas turbine and may be installed in the example variable stator vane arrangement of Figure 2, for installation in a gas turbine engine as described above with reference to Figure 1. For example, the linear actuator may be coupled to a unison ring via a mechanical linkage for actuating rotation of one or more variable stator vanes.

Actuation of a variable stator vane arrangement represents one example use in a gas turbine engine. A linear actuator as described herein may be used to actuate other mechanisms in a gas turbine engine or other machine.

As shown in Figure 3, the actuator 300 comprises a first part and a second part moveable relative one another and defining a plurality of module-receiving locations between them for receiving actuator modules 330. In this example, there are four module-receiving locations in parallel, in which three actuator modules 330 are received. The first part comprises a first end support 312 configured to support first ends of actuator modules received in the respective module-receiving locations. In this example, the first end support is in the form of a cross with each arm of the cross corresponding to support of a respective actuator module. In other examples, there may be any number of module-receiving locations, and the first end support may take any suitable shape.

The second part 320 comprises a drive plate 320 which is structurally attached to second ends of the actuator modules. In use, the actuator modules are operated so that there is relative movement between their first and second ends. As the actuator modules are arranged in parallel, the cause the drive plate 320 (i.e. the second part) to move relative the first end support 312 (i.e. the first part).

The actuator modules may be operated by providing a drive fluid to an internal chamber to act on a piston, as will be described in further detail below with respect to other examples.

**Figure 4** is a side view of the the actuator 300 in further detail. As shown in Figure 4, the first part 310 comprises the first end support 312 which is mounted to a support frame 314. In this example, the support frame extends longitudinally (i.e. with respect to the axes of the actuator modules) below the actuator modules, but in other examples may take any suitable form. For example, the support frame may comprise a plurality of longitudinal struts disposed around the actuator modules, whilst permitting access between them to the module-receiving locations.

A second end support 316 is mounted to the support frame 314 towards an opposing second end of the actuator modules. In this example, the second end support 316 carries a plurality of bearing mounts 318 each configured to slidably receive a part of a respective actuator module, in particular a piston arm as will be described in further detail with respect to the examples below. In some examples, the bearing mount is separate from the actuator modules, such that when an actuator module is removed from a module-receiving location, the bearing mount remains on the second end support. However, in other examples, a bearing mount may be integrally provided with the actuator, and a second end support may be configured to receive the bearing mount or another part of a respective actuator module towards a second end of the actuator module.

The piston arm of each actuator module extends through the bearing mount and is coupled to the drive element 320 as described above. Each piston arm may be coupled to the drive element 320 in any suitable way, for example by way of a snap-fit connection.

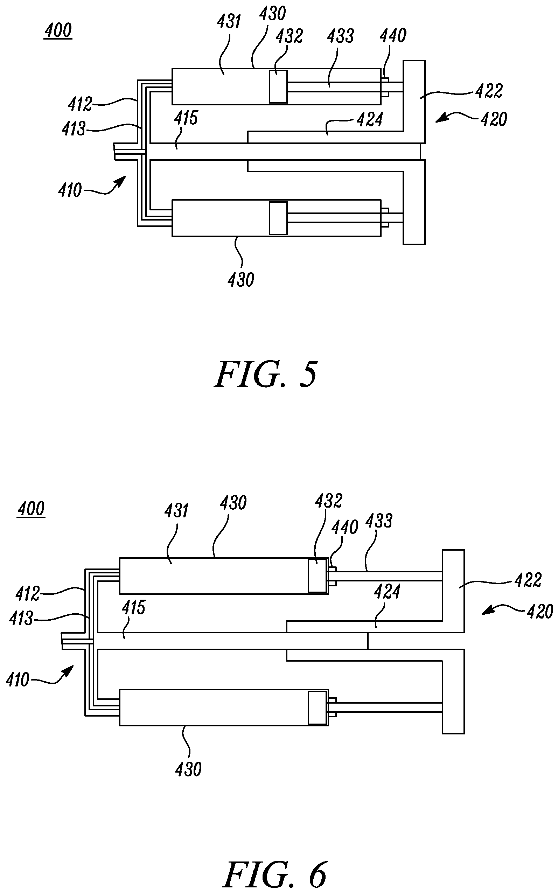

**Figures 5 and 6** schematically show side cross-sectional views of a second example fluid-driven modular actuator 400, with two module-receiving locations shown for simplicity, each with a respective actuator module 430 received therein. Figure 5 shows the actuator 400 in a retracted configuration and Figure 6 shows the actuator 400 in an extended configuration.

In this example, the actuator 400 comprises a first part 410 comprising a first end support 412 and a central shaft 415 integrally formed together, for example by additive manufacture.

The first end support 412 comprises a plurality of support arms each associated with a respective module-receiving location. In this example, the first end support 412 integrally comprises a first fluid manifold 413 comprising a plurality of channels extending from a first actuator port (i.e. an inlet and outlet port for receiving and discharging drive fluid into and from the actuator) to a module port for a respective module-receiving location and actuator module in a respective one of the support arms. In other examples, a fluid manifold may be externally mounted on the first end support, or fluid may be provided directly to each actuator by respective pipelines.

In this example, each support arm comprises a structural attachment point for mounting a first end of a respective actuator module, for example a snap-fit attachment point, or any other suitable mounting. In some examples, the attachment point may be a threaded connection.

Each structural attachment point of the first end support may be a compound structural and fluid coupling, so as to attach the first end support 412 to a respective first end of an actuator module and also provide fluid communication between the first fluid manifold and a chamber of the actuator module 430, as will be described in detail below. In other example, a fluid coupling may be separate from a structural attachment.

In this example, the first end support 412 comprises four support arms for mounting four actuator modules disposed around the central shaft 415 of the first part 410. The central shaft 415 extends along a longitudinal length (i.e. parallel with the axes of actuator modules received in the module-receiving locations) which substantially corresponds to the longitudinal extent of the actuator 400 in the retracted configuration. The second part 420 comprises a drive plate 422 and integral shaft collar 424 slidably mounted on the central shaft 415 of the first part. The central shaft 415 and shaft collar 424 cooperate to constrain the second part 420 to linear movement relative to the first part. The drive plate extends radially from an end of the shaft collar away from the first part. In this example, the drive plate 422 is in the form of an annular flange, but in other examples it may take any suitable shape.

Sliding relative movement between the first part 410 and the second part 420 is caused by linear extension and/or retraction of one or more actuator modules 430 received in module-receiving locations defined between the first part and the second part.

For simplicity, one example actuator module 430 installed in a module-receiving location will be described below, but there may be a plurality of such actuator modules received in respective module-receiving locations.
The actuator module 430 comprises a body defining a chamber which is partitioned by a piston 432 to define a first fluid chamber 431 towards a first end of the actuator module 430 (i.e. towards the first end support of the first part) and a second fluid chamber towards a second opposing end of the actuator module (i.e. towards the drive plate 422 of the second part). The piston 432 is located within the chamber and a piston arm 433 extends from a second side of the piston 432 and out of the body to couple with a structural attachment point on the drive plate 422, for example a snap-fit connection.

In this example, a bearing mount 440 is provided on the second end of the body to guide the piston arm 433 in sliding movement relative the body. In this particular example, the bearing mount 440 is not directly supported by either of the first or second parts of the actuator support.

In use, the first fluid chamber 431 is charged with a drive fluid, and is in fluid communication with a motive fluid system via the first fluid manifold 413 of the first part 410 of the actuator support. The motive fluid system may be a hydraulic or pneumatic system, for example. The motive fluid system may be a fueldraulic system, for example of a gas turbine engine, configured to provide fuel under pressure as a drive fluid for the respective actuator modules.

In an example method of operation, the actuator 400 begins in a retracted configuration as shown in Figure 5. A controller of a motive fluid system determines to cause extension of the actuator (for example, in response to a determination to pivot stator vanes of a variable stator vane arrangement) and causes the motive fluid system to provide drive fluid under pressure to the actuator. For example, the motive fluid system may open a control valve in communication with the first actuator port of the actuator for a predetermined time period to provide drive fluid under pressure to the actuator.

The drive fluid flows through the first fluid manifold 413 to be received in each first fluid chamber 431 of the respective actuator modules, thereby acting on the piston 432 and causing extension of the individual actuator modules along a first direction. The piston arms of the extending actuator modules are linked at the drive plate 422 and cause corresponding extension of the drive plate 422 to reach an extended configuration as shown in Figure 6.

In some examples, the motive fluid system may be configured to controllably drain drive fluid from the first fluid chamber 431 to cause retraction of the respective actuator module along an opposing second direction. For example, the motive fluid system may open a control valve in communication with the first actuator port of the actuator to a low pressure reservoir of the motive fluid system to permit or cause discharge of drive fluid from the actuator module. In some examples, the actuator may be biased to return to one of the retracted and extended configurations. For example, there may be a biasing element between the first and second parts, or a biasing element disposed within each individual actuator module, so as to promote discharge of drive fluid from the first fluid chamber by action of the piston along the second direction. In other examples, the motive fluid system may be configured to draw drive fluid (i.e. under negative pressure) from the first fluid chambers of the actuators, for example by operation of a pump, such that the motive fluid system may be controllably operated to retract the actuator.

In other examples, there may be an alternative configuration of a fluid chamber and piston in an actuator module such that supply of drive fluid to the fluid chamber corresponds to retraction of the actuator module, whereas discharge of drive fluid corresponds to extension of the actuator module. For example, the fluid chamber may be provided on an opposing side of the piston to that described above.

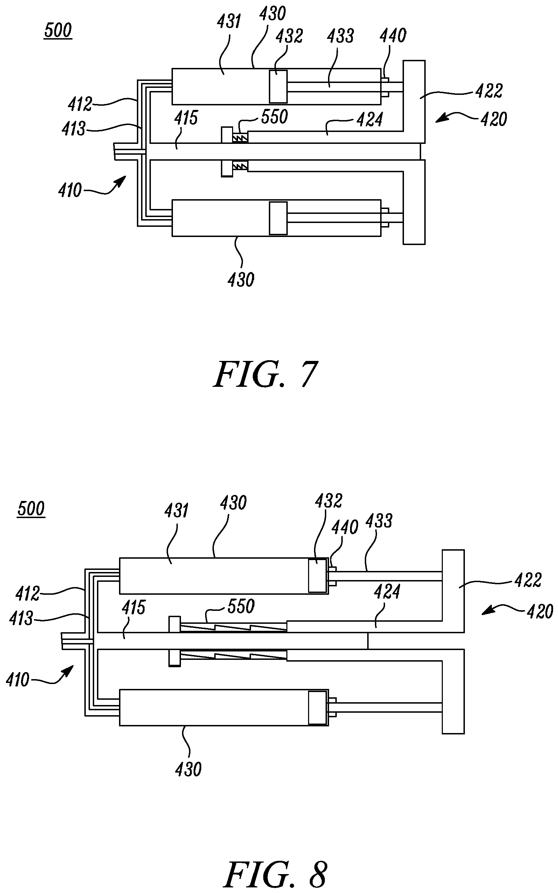

**Figures 7 and 8** show a third example actuator 500 which differs from the second example actuator 400 described above with respect to Figures 5 and 6 in that a biasing element 550 is provided which acts between the first part 410 and the second part 420 of the actuator support. In this example, the biasing element 550 is configured to bias the actuator 500 to the retracted configuration of Figure 7. In use, drive fluid is provided under pressure to the first fluid chamber 431 of each respective actuator module, so as to overcome a biasing force of the biasing element and drive the actuator to move to the extended configuration. To return to the retracted configuration, a motive fluid system is operated to permit drive fluid to drain from the respective first fluid chambers 431, and the biasing element acts between the first part and the second part such that the respective pistons 432 move to reduce the volume of the first fluid chambers 431 and discharge drive fluid from the first fluid chambers 431.

The provision of a biasing element permits return of the actuator without external actuation, for example by permitting the drive fluid to be discharged from the respective first fluid chambers 431 under action of the biasing element. The provision of a biasing element may further control vibration, or dampen movement of an actuated component (e.g. a stator vane). When the actuator is used in a stator vane actuation arrangement, such movement of an actuated component may result from non-normal engine conditions such as a surge. The provision of a biasing element may dampen and/or limit such movement such that a range of travel of the actuator to tolerate such non-normal engine conditions may be reduced. Accordingly, the structural margins that may be incorporated into the design of an actuation arrangement to accommodate such variable conditions may be reduced.

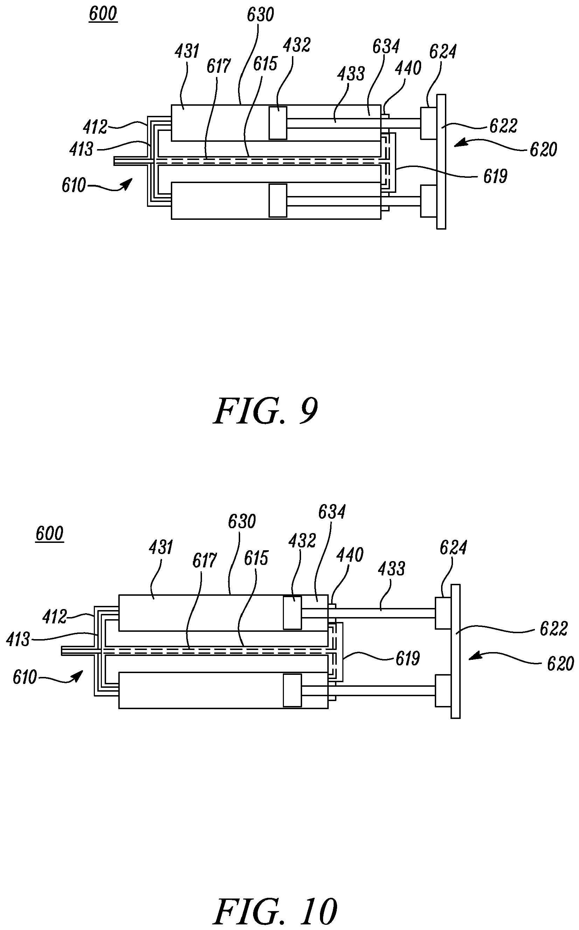

**Figures 9 and 10** show a fourth example modular fluid-driven linear actuator 600 which differs from the second example actuator 400 described above with respect to Figures 5 and 6 in it is configured for the supply of a drive fluid to a second fluid chamber 634 of each actuator module 630 to drive the piston 432 in the second direction.

In this example, the first part 610 comprises the first fluid manifold 413 integrally formed within the support arms of the first end support as descried above, and a further second fluid manifold 619 integrally formed within a second end support towards the second end of the body of the actuator. In this example, the second end support is supported on the central shaft 615 which is as described above with respect to the second example actuator 400, additionally comprising a channel 617 to provide drive fluid from a second actuator port of the actuator 600 to the second fluid manifold 619. Whilst not shown in Figures 9 and 10, the channels between the first actuator port of the actuator 600 and the first fluid manifold 413 (shown in solid lines) are distinct from the channel 617 between the second actuator port of the actuator 600 and the second fluid manifold 619. In this example, the fluid channels of the first part 610 (i.e. the first and second fluid manifolds and the channel along the shaft) are integrally formed with the first part 610 by additive manufacture. However, in other examples, they may be formed in other ways, for example in a casting procedure, or by drilling. As mentioned elsewhere herein, in yet further examples fluid may be delivered by external pipelines.

The second end support comprises structural attachment points configured to engage the respective actuator modules 630 towards the second end of each respective actuator body. For example, the structural attachment points may be configured to engage the respective actuator modules 630 by way of a snap fit.

The second end support further comprises a plurality of module ports of the second fluid manifold 619. In this example, the module ports are integrated with the structural attachment points to provide a compound structural and fluid coupling. However, in other examples the module ports may be separate from the structural attachment points.

The second part 620 of this example comprises a drive plate 622 with structural attachment points 624 corresponding to each module-receiving location. For example, the structural attachment points 624 may be configured to make a snap-fit connection with a piston arm 433 of an actuator module 630 as described above. The second part 620 of this example differs from the example second parts 420 described above with respect to the example actuators 400, 500 of Figures 5-8 in that the second part does not slide along a central shaft of the first part to constrain movement of the second part relative the first part to linear direction along a longitudinal axis. In this example, such movement is constrained by virtue of secure holding of the actuator modules 630 on the first part, including the optional structural attachment of the actuator body to the first part at both first and second ends of the body. In other examples, the second part may be constrained to move relative the first part in other ways, for example by being received in a close-fitting housing, or provided on a rail or other guide which is separate from the first part.
The actuator module 630 of this example is as described above with respect to the actuator modules of the second and third example actuators 400, 500, and in addition comprises a second fluid chamber 634 disposed on the second side of the piston 432 - i.e. on the opposing side with respect to the first fluid chamber 431. The second fluid chamber 634 is configured to receive drive fluid from and discharge drive fluid to the second fluid manifold 619.

In this example, a bearing mount 440 associated with each module-receiving location is structurally supported on the second end support and configured to slidably receive a slideable component of a respective actuator module 630 as described above.

In use, the actuator 600 is moved from the retracted configuration shown in Figure 9 to the extended configuration of Figure 10 by providing a drive fluid to the first fluid chamber 431 to act on the piston 432 in the first direction, whilst permitting drive fluid to be discharged from the second fluid chamber 634. The drive fluids may be the same or different. Such supply and discharge of drive fluid may be controlled by a motive fluid system coupled to the first and second actuator ports of the actuator 600. For example, the motive fluid system may be controlled to open a valve to supply a first drive fluid under pressure to the first actuator port (for flow through the first fluid manifold 413 and into the first fluid chamber 431) for a predetermined time, and to simultaneously open a control valve between the second actuator port to and a reservoir of drive fluid at relatively lower pressure to permit discharge of drive fluid from the second fluid chamber 634 of each actuator module 630.

The actuator 600 is operable in the reverse way to move from the extended configuration to the retracted configuration, i.e. by supply of drive fluid under pressure to the second fluid chamber 634 via the second actuator port and the second fluid manifold 619, and by permitting drive fluid to be discharged from the first fluid chamber 431 via the first fluid manifold 413 and the first actuator port, so as to cause the piston 432 to be moved in the second direction.

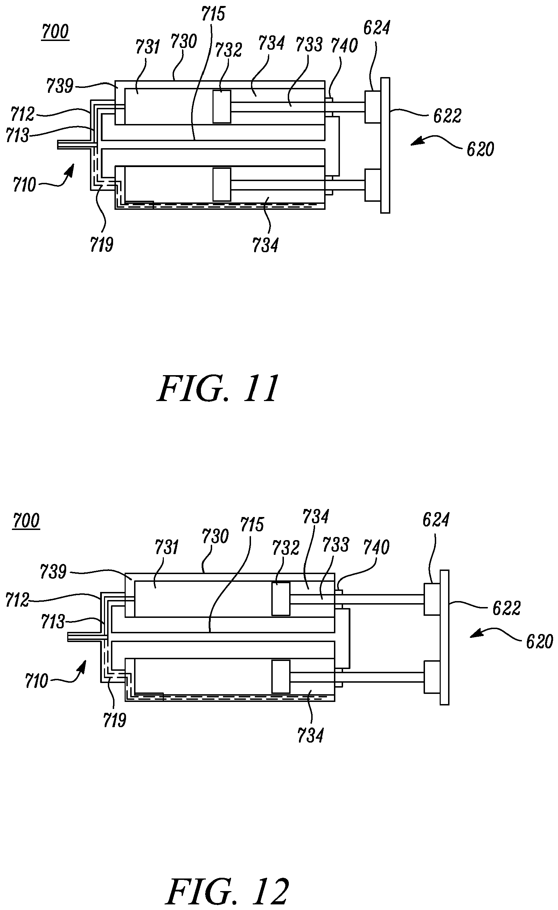

**Figures 11 and 12** shows a fifth example actuator 700 which differs from the fourth example 600 described above with respect to Figures 9 and 10 in that the first part 710 comprises a first end support which incorporates both the first and second fluid manifolds 713, 719. The first fluid manifold 713 is as described above with respect to the previous examples. The second fluid manifold 719 is similar to the first fluid manifold 713 in that it has branches which extend along each of the plurality of support arms of the first end support 712 and terminates at a respective module port for each respective module-receiving location. Accordingly, each support arm of the first end support comprises a first module port associated with the first fluid manifold 713 and a second module port associated with the second fluid manifold 719.

For clarity, the first fluid manifold is shown in solid lines in an upper portion of the drawings associated with the upper module receiving location that is illustrated, and the second fluid manifold is shown in dashed lines in a lower portion of the drawings associated with the lower module receiving location that is illustrated. However, it will be appreciated that each support arm comprises both portions (i.e. branches) of both the first and the second fluid manifolds 713, 719.

The fifth example actuator 700 further differs from the example actuator 600 described above with respect to Figures 9 and 10 in the configuration of the actuator modules 730, which will be described below with reference to a single actuator module 730 for simplicity.

The actuator module 730 comprises an actuator body having a first inlet port configured to fluidically couple with a respective port (i.e. a first actuator port) of the first fluid manifold, and a second inlet port configured to fluidically couple with a respective port (i.e. a second actuator port) of the second fluid manifold. In this example, both the first and second inlet ports are provided at the same first end of the actuator body (i.e. the end towards the first end support 712 in use).

The actuator body comprises a body 739 defining a chamber which is partitioned by a piston 732 to define a first fluid chamber 731 towards a first end of the actuator module (i.e. towards the first end support of the first part) and a second fluid chamber 734 towards a second opposing end of the actuator module (i.e. towards the drive plate 622 of the second part). The piston 732 is located within the chamber and a piston arm 733 extends from a second side of the piston 732 and out of the body to couple with a structural attachment point on the drive plate 622, for example a snap-fit connection.

The actuator body differs from that of the previous examples in that it additionally comprises a bypass channel configured to convey drive fluid from the second inlet port to the second fluid chamber. In this example, the bypass channel is disposed outside of the chamber in which the piston 732 is received. In some examples, the bypass channel may be integral with a wall of the chamber, or may be provided in the form of a conduit lying along the side of a wall of the chamber.

The actuator body may be made by additive manufacture, so as to easily form the bypass channel and any other channels without boring (e.g. a short channel extending between the first inlet port and the first fluid chamber 731, as shown in Figure 11).

Functionally, the fifth example actuator 700 functions in the same way as the fourth example actuator 600 as described above.

As will be appreciated, the fifth example actuator 700 uses a more complex actuator module 730 than the actuator modules of the fourth example actuator 600, but there is reduced complexity in the actuator support, in particular the first part 710.

Although the first part 710 of this example includes a central shaft 715 which is used to support a second end support and bearing mounts 740 as described above, in other examples there may be no central shaft 715, and optionally no second end support. As stated elsewhere herein, bearing mounts 740 may be integrally provided on a respective actuator module.

In some examples, one or more actuator modules may be attached to the second end support by a joint that permits relative pivoting movement between the second end support and the respective actuator, such as a universal joint or ball joint. The actuator may be configured to cause tilting of the second end support, for example by moving one or more actuator modules at a different rate to one or more other actuator modules (i.e. a first set and a second set of actuator modules). The two sets of actuator modules may have different piston areas in order to effect different rates of movement, or may be provided with drive fluid through different manifolds that may be coupled to different sources of drive fluid. Example applications of such a modular fluid-drive actuator include providing tilt for variable swash pump plates, or to permit a system to be adjusted (e.g. during servicing) to compensate for distortion or misalignment of parts.

By providing a modular fluid-driven actuator 300, 400, 500, 600, 700 as described with respect to the examples herein, it becomes possible to change the mechanical advantage of the actuator by changing the number of installed actuators. In particular, it will be appreciated that for a given motive fluid pressure, the force output of an actuator is a function of the piston area.

By installing additional actuator modules, or removing them, the total piston area of the actuator can be varied, to thereby permit the force output of the actuator for given fluid inlet conditions (i.e. pressure and flow rate of drive fluid) to be varied.

In some examples, an actuator module may be replaced with one having a different piston area, or multiple actuator modules each having different individual piston areas may be used.
The inventors have found that such reconfiguring of a fluid-driven linear actuator as described herein can be useful during test and development of a machine such as a gas turbine engine, or upon reconfiguration of a motive fluid system.

In particular, it is conventional practice to size and design an actuator to provide a specific force for a given motive fluid pressure. However, during initial design and test phases, the force required may not be settled upon, or the pressure of a drive fluid system may not be settled upon. Accordingly, it may be necessary to commission a further actuator once a revised requirement becomes clear, or when a supply pressure of a drive fluid system is changed or it is elected to use a different drive fluid system altogether. Such re-commissioning of an actuator may be problematic, particular when limited space is allocated for the actuator in the machine. Accordingly, it may be required to design an appropriate actuator from scratch (rather than use an off-the-shelf actuator), or make compromises in the system design to accommodate an undersized actuator.

The use of a modular linear actuator as described herein enables rapid reconfiguration of the actuator to vary the actuation force for a given pressure, without affecting the footprint of the actuator. In the design of a gas turbine engine or other machine, a space for an actuator may therefore be set aside to accommodate a reasonable amount of such axial variation. Such reconfiguration may be done during development and test, and also during in-service reconfigurations of the machine.

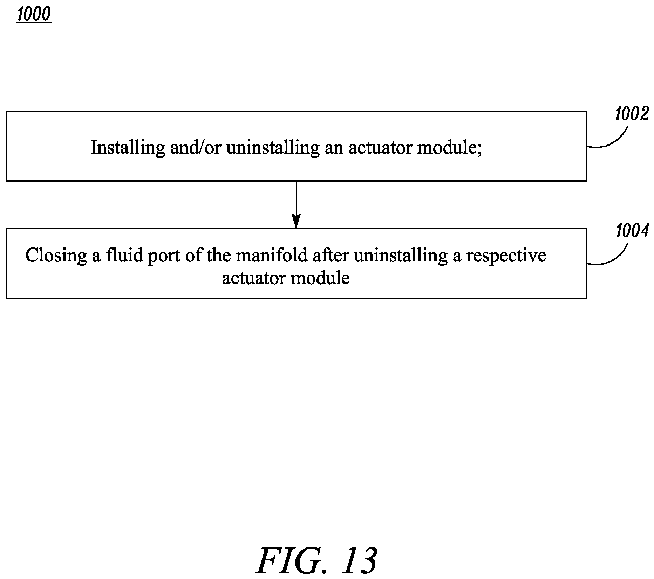

**Figure 13** is a flow diagram of an example method 1000 of reconfiguring an actuator module, which may be carried out with respect to any of the example actuators described above. The method comprises, in block 1002, installing an actuator module to an unoccupied module-receiving location to increase a total piston area of the actuator, and/or uninstalling an installed actuator module from a module receiving location to reduce the total piston area of the actuator.

The actuator modules may be alike in that they are each configured to be installed in any one of the module-receiving locations. The actuator modules may differ from one another, for example two actuator modules may have different piston areas. Use of actuator modules having different piston areas may enable greater control of the total piston area and thereby the mechanical advantage of the actuator as a whole. For example, if four identical actuator modules are provided for use with a modular actuator having four module-receiving locations, then there are effectively four different levels of mechanical advantage that can be achieved. If five actuator modules are provided for use with the same modular actuator, one of the actuator modules having an effective piston area equal to one half the piston area of any other actuator module, then it becomes possible to provide eight different levels of mechanical advantage.

When uninstalling an installed actuator module, the or each respective actuator port of the or each respective fluid manifold may be closed, i.e. block 1004 in Figure 13. For example, each actuator port may be configured to be closed by a closure, for example a plug or cap, which may be configured for push-fitting closed, or may be configured to be closed by way of a threaded connection. When such closures are installed, they may be removed before installing or re-installing an actuator module in the respective module-receiving location.

The features of each example can be combined with the features of each other example, except where mutually exclusive.

It will be understood that the invention is not limited to the embodiments above-described and various modifications and improvements can be made without departing from the concepts described herein with the scope of the following claims. Except where mutually exclusive, any of the features may be employed separately or in combination with any other features and the disclosure extends to and includes all combinations and sub-combinations of one or more features described herein.

## Claims

**1.** A modular fluid-driven linear actuator (300, 400, 500, 600, 700) comprising:
an actuator support comprising a first part (310, 410, 610, 710) and a second part (420, 620) configured for relative linear movement, wherein the actuator support is configured to hold a plurality of removable actuator modules (330, 430, 630, 730) in parallel and in respective module-receiving locations defined between the first part and the second part;
at least one actuator module removably installed in the actuator support and held in a respective module receiving location of the plurality; and
a first fluid manifold (413, 713) configured to provide a drive fluid to each actuator module when received in a respective module-receiving location, to act on a piston (432, 732) of the actuator module having a respective piston area to drive the piston in a first direction;
whereby a total piston area of the modular actuator is variable by installing and uninstalling actuator modules in the actuator support.

**2.** The modular fluid-driven linear actuator of claim 1, wherein the first part (310, 410, 610, 710) comprises a plurality of structural attachment points (624), each configured to support a respective one of the plurality of removable actuator modules.

**3.** The modular fluid-driven linear actuator of claim 1 or 2, wherein the first part (310, 410, 610, 710) comprises a plurality of support arms, each defining a respective structural attachment point (624) for holding a removable actuator module.

**4.** The modular fluid-driven linear actuator of any preceding claim, wherein the first fluid manifold (413, 713) is integral with the first part.

**5.** The modular fluid-driven linear actuator of claim 4, wherein the first part (310, 410, 610, 710) is made by additive manufacture.

**6.** The modular fluid-driven linear actuator of any preceding claim, wherein the first part (310, 410, 610, 710) comprises a plurality of compound structural and fluid couplings each configured to support a respective removable actuator module and to provide drive fluid from the first fluid manifold (413, 713) to the actuator module.

**7.** The modular fluid-driven linear actuator of any preceding claim, wherein the module-receiving locations are defined in an array distributed around a central shaft (415, 615, 715) of the actuator support, wherein one of the first part (310, 410, 610, 710) and the second part (420, 620) is slidably received on the central shaft for relative linear movement between the first part and the second part.

**8.** The modular fluid-driven linear actuator of any preceding claim, comprising two structural attachment points (624) associated with each respective module-receiving location, optionally wherein the two structural attachment points are configured to support an actuator module towards opposing ends.

**9.** The modular fluid-drive linear actuator of claim 8, wherein one of the two structural attachment points (624) associated with each respective module-receiving location is configured to statically receive a bearing mount (318, 440, 740) configured to support a slideable part of an actuator module when received in the respective module-receiving location, the slideable part moving moves together with the piston (432, 732).

**8.** The modular fluid-driven linear actuator of any preceding claim, wherein the second part (420, 620) is configured to attach to a piston (432, 732) of each actuator module (330, 430, 630, 730), such that when a plurality of actuator modules are installed in respective module receiving locations, movement of each of the pistons drives movement of the second part.

**9.** The modular fluid-driven linear actuator of any preceding claim, wherein a piston (432, 732) of the at least one actuator module (330, 430, 630, 730) has a travel between a first position and a second position,
wherein the actuator comprises a biasing element (550) to bias a piston of the at least one actuator module to return to the first position, and wherein the piston is configured to move from the first position to the second position when fluid is provided through the first fluid manifold (413, 713) to the actuator module.

**10.** The modular fluid-driven linear actuator of any preceding claim, further comprising a second fluid manifold (619, 719) configured to provide a drive fluid to each actuator when received in a respective module, to act on the piston (432, 732) of the actuator module to drive the piston in a second direction opposing the first direction.

**11.** The modular fluid-driven linear actuator of claim 10, wherein the first fluid manifold (413, 713) has outlet ports disposed towards a first end of the module-receiving locations and configured to provide drive fluid to a first fluid chamber (431, 731) of an actuator module when received in a respective module-receiving location, the first fluid chamber being on a first side of the piston (432, 732), and
wherein the second fluid manifold (619, 719) has outlet ports disposed towards a second end of the module-receiving locations and is configured to provide drive fluid to a second fluid chamber (634, 734) of an actuator module when received in a respective module-receiving location, the second fluid chamber being on a second side of the piston.

**12.** The modular fluid-driven linear actuator of claim 10, wherein the at least one actuator module (330, 430, 630, 730) comprises:
a piston chamber which slidably receives the piston (432, 732);
a first inlet port configured to receive drive fluid from a respective outlet port of the first fluid manifold (413, 713) on a first side of the piston and to provide the drive fluid to a first fluid chamber (431, 731) on the first side of the piston to act on the piston;
a second inlet port configured to receive drive fluid from a respective outlet port of the second fluid manifold (619, 719) on the first side of the piston; and
a bypass channel configured to convey drive fluid from the second inlet port to a second fluid chamber on a second opposing side of the piston to act on the piston.

**13.** A gas turbine engine (10) comprising a modular fluid-driven linear actuator (300, 400, 500, 600, 700) of any preceding claim;
wherein the gas turbine engine comprises a variable stator vane arrangement, and wherein the modular fluid-driven linear actuator is configured to actuate the variable stator vane arrangement.

**14.** A method of reconfiguring a fluid-driven linear actuator in accordance with any one of claims 1 to 12, the method comprising varying a total piston area of the actuator by:
installing an actuator module in one of the module receiving locations; and/or
uninstalling an actuator module installed in one of the module receiving locations (1002).

**15.** The method of claim 14, further comprising closing a fluid port of the manifold corresponding to an uninstalled actuator module, after uninstalling the respective actuator module (1004).
